(19) Europäisches Patentamt / European Patent Office / Office européen des brevets

(11) **EP 4 773 047 A1**

(12) **EUROPEAN PATENT APPLICATION**

(43) Date of publication:
**08.07.2026 Bulletin 2026/28**

(21) Application number: **25220899.6**

(22) Date of filing: **04.12.2025**

(51) International Patent Classification (IPC):
*G06N 10/20* (2022.01)

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.01.2025 JP 2025002562**

(71) Applicant: **FUJITSU LIMITED**
**Kawasaki-shi, Kanagawa 211-8588 (JP)**

(72) Inventor: **LIU, Yu**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **INFORMATION PROCESSING PROGRAM, INFORMATION PROCESSING METHOD, AND INFORMATION PROCESSING DEVICE**

(57) An information processing program for causing a computer to execute a process, the process includes: obtaining a decomposition number of a Trotter decomposition approximating a quantum unitary corresponding to an Ising model; and setting a quantum circuit expressing a formula of the Trotter decomposition by one or more first partial circuits and a second partial circuit, the one or more first partial circuits being of a first count one less than the obtained decomposition number and each including an Rz gate that represents a rotation action about a Z-axis on a qubit, the second partial circuit being free of the Rz gate and coupled to a rear of the one or more first partial circuits.

FIG.13

```
                    START
                      │
                      ▼
┌─────────────────────────────────────────┐ S1301
│ OBTAIN ISING MODEL HAVING TRANSVERSE     │
│ MAGNETIC FIELD                           │
└─────────────────────────────────────────┘
                      │
                      ▼
┌─────────────────────────────────────────┐ S1302
│ DETERMINE DECOMPOSITION NUMBER r BASED   │
│ ON APPROXIMATE ACCURACY OF TROTTER       │
│ DECOMPOSITION AND BALANCE OF CALCULATION │
│ NOISE                                    │
└─────────────────────────────────────────┘
                      │
                      ▼
┌─────────────────────────────────────────┐ S1303
│ SET, FROM HEAD TO (r−1)-TH STAGE,        │
│ OVERLAPPING CIRCUITS THAT FORM QUANTUM   │
│ CIRCUIT EXPRESSING FORMULA OF TROTTER    │
│ DECOMPOSITION                            │
└─────────────────────────────────────────┘
                      │
                      ▼
┌─────────────────────────────────────────┐ S1304
│ SET r-TH STAGE OVERLAPPING CIRCUIT THAT  │
│ FORMS QUANTUM CIRCUIT EXPRESSING FORMULA │
│ OF TROTTER DECOMPOSITION                 │
└─────────────────────────────────────────┘
                      │
                      ▼
┌─────────────────────────────────────────┐ S1305
│ DELETE Rz GATE AND Rzz GATE FROM SET     │
│ OVERLAP CIRCUIT OF r-TH STAGE            │
└─────────────────────────────────────────┘
                      │
                      ▼
┌─────────────────────────────────────────┐ S1306
│ SET QUANTUM CIRCUIT EXPRESSING FORMULA   │
│ OF TROTTER DECOMPOSITION BY COUPLING TO  │
│ REAR OF OVERLAPPING CIRCUITS FROM HEAD   │
│ TO (r−1)-TH STAGE, OVERLAPPING CIRCUIT   │
│ OF r-TH STAGE FROM WHICH Rz GATE AND     │
│ Rzz GATE ARE DELETED                     │
└─────────────────────────────────────────┘
                      │
                      ▼
                     END
```

EP 4 773 047 A1

**Description**

FIELD

The embodiments discussed herein are related to an information processing program, an information processing method, and an information processing device.

BACKGROUND

According to one conventional technique, an Ising model, which is a mathematical model of a ferromagnetic material in statistical mechanics, is realized by a quantum circuit. For example, it is conceivable to express, by a quantum circuit, a formula of Trotter decomposition that approximates a quantum unitary corresponding to the Hamiltonian of the Ising model.

Prior art techniques include, for example, performing stepwise quantum algorithm decomposition. In addition, for example, there is a technique of sampling from a probability distribution that approximates a Boltzmann distribution of an n-spin Ising model. Further, for example, there is a technique of generating a quantum circuit from a unitarily coupled cluster hypothesis. In addition, for example, there is a technique of calculating an expected value of a spin configuration of a target Hamiltonian by a probabilistic propagation algorithm. In addition, for example, there is a technique for simulating a quantum system. For example, refer to U.S. Patent Application Publication No. 2019/0362270, U.S. Patent Application Publication No. 2023/0297865, Published Japanese-Translation of PCT Application, Publication No. 2023-521223, Japanese Laid-Open Patent Publication No. 2020-080006, and Published Japanese-Translation of PCT Application, Publication No. 2020-521235.

SUMMARY

It is desirable to at least solve the above problems in the conventional technologies.

According to an aspect of an embodiment, an information processing program for causing a computer to execute a process, the process includes: obtaining a decomposition number of a Trotter decomposition approximating a quantum unitary corresponding to an Ising model; and setting a quantum circuit expressing a formula of the Trotter decomposition by one or more first partial circuits and a second partial circuit, the one or more first partial circuits being of a first count one less than the obtained decomposition number and each including an Rz gate that represents a rotation action about a Z-axis on a qubit, the second partial circuit being free of the Rz gate and coupled to a rear of the one or more first partial circuits.

BRIEF DESCRIPTION OF DRAWINGS

Reference will now be made, by way of example only, to the following drawings, in which:

Fig. 1 is an explanatory diagram depicting an example of an information processing method according to an embodiment.
Fig. 2 is an explanatory diagram depicting an example of an information processing system 200.
Fig. 3 is a block diagram depicting a hardware configuration example of an information processing device 100.
Fig. 4 is a block diagram depicting an example of a functional configuration of the information processing device 100.
Fig. 5 is an explanatory diagram depicting an example of operation of the information processing device 100.
Fig. 6 is an explanatory diagram depicting a reason why a Rz gate may be deleted.
Fig. 7 is an explanatory diagram depicting a specific example of a conventional quantum circuit 700 expressing a formula of Trotter decomposition.
Fig. 8 is an explanatory diagram depicting a specific example of a quantum circuit 800 expressing the formula of Trotter decomposition.
Fig. 9 is an explanatory diagram depicting an example of an effect.
Fig. 10 is an explanatory diagram depicting an example of an effect.
Fig. 11 is an explanatory diagram depicting an example of an effect.
Fig. 12 is an explanatory diagram depicting an example of an effect.
Fig. 13 is a flowchart depicting an example of an overall process procedure.

DESCRIPTION OF EMBODIMENTS

First, problems associated with the conventional technique are discussed. The related arts have a problem in that the depth of the quantum circuit expressing the formula of Trotter decomposition tends to increase. For example, when the decomposition number of the Trotter decomposition is increased in order to reduce the approximation error, the depth of the quantum circuit expressing the formula of Trotter decomposition increases.

Embodiments of an information processing program, an information processing method, and an information processing device according to the present disclosure are described in detail with reference to the accompanying drawings.

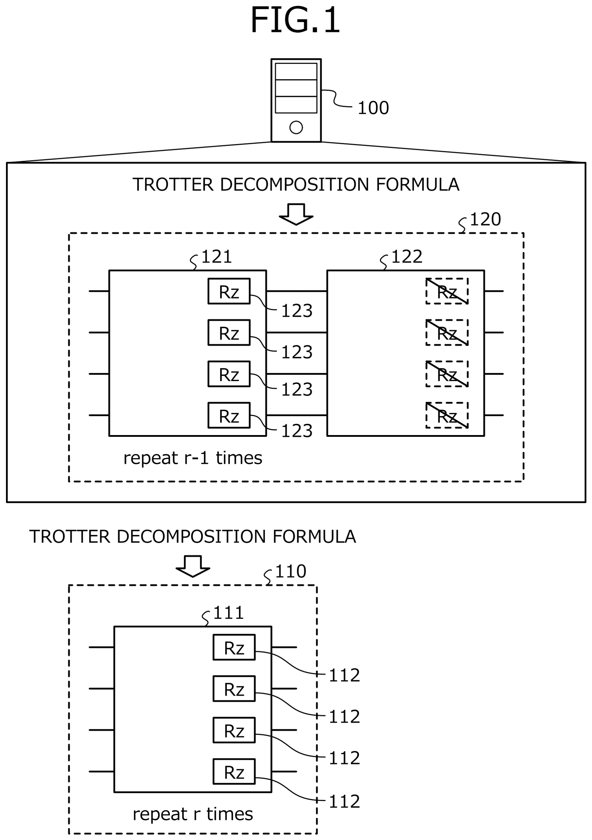

Fig. 1 is an explanatory diagram depicting an example of the information processing method according to an embodiment. An information processing device 100 is a computer for setting a quantum circuit expressing the formula of Trotter decomposition. The information processing device 100 is, for example, a server or a personal computer (PC). In the following description, for convenience, a character a with a superscript c or the like may be expressed as "a^c".

Conventionally, there is a technique called Trotter decomposition that approximates an operator in which the sum of two real or complex square matrices A and B is an exponential part and the base is e. There is also a technique called Suzuki-Trotter decomposition, which is an improvement of Trotter decomposition. The formula of the Suzuki-Trotter decomposition is defined by, for example, the following formula (1). In the following description, "Trotter decomposition" includes "Suzuki-Trotter decomposition".

$$e^{t(A+B)} = \lim_{n \to \infty} \left( e^{\frac{t}{n}A} e^{\frac{t}{n}B} \right)^n , \, t \in R, \, n \in N \quad \dots (1)$$

In statistical mechanics, an Ising model is a mathematical model of a ferromagnetic material. The Ising model is formed by, for example, lattice points having two states called spins, and describes a motion of a target system. In addition, a transverse magnetic field may be introduced into the Ising model. The energy of the system is defined by, for example, the following formula (2). The spin distribution is defined by, for example, the following formula (3) and the following formula (4).

$$E = -\sum_{<ij>} J_{ij}\sigma_i\sigma_j - \sum_j h_j\sigma_j , \, where \, \sigma = \{\sigma_k\}_{k \in \Lambda}, \, \sigma_k \in \{-1,1\} \dots (2)$$

$$P_T(\sigma) = \frac{e^{-\frac{1}{T_B}\mathcal{H}(\sigma)}}{Z_{T_B}} \quad \dots (3)$$

$$Z_T = \sum_\sigma e^{-\frac{1}{T_B}\mathcal{H}(\sigma)} \quad \dots (4)$$

Here, in order to handle the Ising model in an actual machine of a quantum computer, it may be desired to implement the Ising model by a quantum circuit. A quantum circuit is a combination of quantum gates that manipulate quantum states represented by N qubits. A quantum gate represents, for example, manipulating a quantum state represented by one qubit, creating an entanglement between two qubits, or the like.

On the other hand, it is conceivable to implement the Ising model by a quantum circuit by applying Trotter decomposition to the Ising model. For example, it is conceivable that a quantum unitary corresponding to a Hamiltonian of an Ising model into which a transverse magnetic field is introduced is approximated by Trotter decomposition, and the formula of Trotter decomposition for approximating the quantum unitary is expressed by a quantum circuit.

The Hamiltonian is defined by, for example, the following formula (5). The quantum unitary is defined by, for example, the following formula (6). The formula of Trotter decomposition approximating the quantum unitary is defined by, for example, the following formula (7), the following formula (8), the following expression (9), and the following formula (10). r is a decomposition number of the Trotter decomposition. The decomposition number is also referred to as the number of duplicates.

$$H = -\sum_j h_j Z_j - \sum_{jk} J_{jk} Z_j Z_k - \gamma \sum_j X_j \quad \dots (5)$$

$$U = e^{-iHt} \quad \dots (6)$$

$$U \sim U' = \left(e^{-iH_Z \Delta t} e^{-iH_{ZZ} \Delta t} e^{-iH_X \Delta t}\right)^r + \mathcal{O}\left(\frac{\| H_Z \| \| H_{ZZ} \| \| H_X \|}{r^2}\right) \quad \dots (7)$$

$$\Delta t = \frac{t}{r} \quad \dots (8)$$

$$r \in \mathbb{N} \quad \dots (9)$$

$$\| A \| = \sup_{x \in V} \frac{\| Ax \|}{\| x \|} \quad \dots (10)$$

As the decomposition number r increases, the approximation error by the Trotter decomposition decreases, and the approximation accuracy by the Trotter decomposition tends to improve. According to the above formula (7), when the decomposition number r is increased, the approximation error due to the Trotter decomposition is considered to be reduced by O(1/r^2). Therefore, in order to reduce the approximation error due to the Trotter decomposition, it may be desirable to increase the decomposition number r of the Trotter decomposition.

However, in order to reduce the approximation error due to the Trotter decomposition, it may be difficult to increase the decomposition number r of the Trotter decomposition. For example, when the decomposition number r of the Trotter decomposition is increased, there is a problem in that the depth of the quantum circuit expressing the formula of Trotter decomposition tends to increase. According to the above formula (7), when the decomposition number r is increased, the depth of the quantum circuit expressing the formula of Trotter decomposition is considered to be increased by O(r).

For example, as the depth of a quantum circuit increases, it becomes difficult to implement the quantum circuit in an actual quantum computer. For example, in an actual machine of a quantum computer of a scale called noisy intermediate-scale quantum (NISQ), the maximum value of the depth of an executable quantum circuit is limited according to a coherence time. The coherence time represents a time during which a qubit may maintain a quantum state. Therefore, when the decomposition number r is increased, there is a case where the quantum circuit expressing the formula of Trotter decomposition cannot be executed by the actual machine of the quantum computer. In other words, there is an upper limit value for the decomposition number r, and the decomposition number r cannot be made larger than the upper limit value.

Further, for example, in an actual machine of a quantum computer, since a specific quantum gate is implemented by a combination of basic gates, there is a problem in that the depth of a quantum circuit tends to increase. For this reason, the upper limit value for the decomposition number r tends to be small and increasing the decomposition number r tends to be difficult. In addition, for example, calculation noise tends to accumulate according to the depth of the quantum circuit. Therefore, there is a problem in that the larger the depth of the quantum circuit, the lower the calculation accuracy. For example, it is considered that the calculation noise increases at O (depth). The depth is the depth of the quantum circuit.

In view of the above, it is desirable to reduce the depth of the quantum circuit expressing the formula of Trotter decomposition while increasing the decomposition number r in order to reduce the approximation error by the Trotter decomposition in consideration of the balance between the approximation error by the Trotter decomposition and the calculation accuracy.

Therefore, in the present embodiment, an information processing method capable of reducing the depth of a quantum circuit expressing the formula of Trotter decomposition is described.

In Fig. 1, first, a conventional quantum circuit 110 expressing the formula of Trotter decomposition is depicted. In the example depicted in Fig. 1, the decomposition number of the Trotter decomposition is r. More specifically, the conventional quantum circuit 110 is formed by sequentially coupling r overlapping circuits 111. More specifically, each of the r overlapping circuits 111 includes an Rz gate 112 representing a rotation action about the Z-axis on the qubit. The Rz gate 112 is provided, for example, for each qubit. The contents of the overlapping circuit 111 specifically correspond to the term of (e^(-iH_Z Δt)e^(-iH_ZZ Δt)e^(-iH_X Δt)) in the above formula (7).

On the other hand, the information processing device 100 sets a quantum circuit 120 expressing the formula of Trotter decomposition as depicted in the following (1-1) and (1-2).

(1-1) The information processing device 100 obtains the decomposition number r of Trotter decomposition, which approximates the quantum unitary corresponding to the Ising model. For example, the information processing device 100 obtains the decomposition number r by receiving an input of the decomposition number r based on an operation input of the user. For example, the information processing device 100 may obtain the decomposition number r by receiving the decomposition number r from another computer. For example, the information processing device 100 may obtain the decomposition number r by calculating the decomposition number r according to a predetermined rule. The predetermined rule is, for example, information that enables calculation of the decomposition number r so that an approximation error by Trotter decomposition satisfies a designated condition.

(1-2) The information processing device 100 sets one or more first partial circuits 121, the number of which is equal to or greater than a first number r-1. The first number is one less than the decomposition number r. More specifically, the one or more first partial circuits 121 each includes an Rz gate 123 representing a rotation action about the Z-axis on the qubit. The Rz gate 123 is provided, for example, for each qubit. The content of the first partial circuit 121 is, for example, the same as the content of the overlap circuit 111. The contents of the first partial circuit 121 specifically correspond to the term of $(e^{\wedge}(-iH_Z\Delta t)e^{\wedge}(-iH_{ZZ}\Delta t)e^{\wedge}(-iH_X\Delta t))$ in the above formula (7).

(1-3) The information processing device 100 sets the second partial circuit 122 coupled to the rear of the one or more first partial circuits 121. More specifically, the second partial circuit 122 does not include the Rz gate 123 representing the rotation action about the Z-axis on the qubit. The number of second partial circuits 122 is one. The content of the second partial circuit 122 corresponds to, for example, the content of the first partial circuit 121 from which the Rz gate 123 is deleted. The content of the second partial circuit 122 specifically corresponds to the expression $(e^{\wedge}(-iH_{ZZ}\Delta t)e^{\wedge}(-iH_X\Delta t))$.

(1-4) The information processing device 100 sets the quantum circuit 120 expressing the formula of Trotter decomposition by the set one or more first partial circuits 121 and the set second partial circuit 122. For example, the information processing device 100 sets the quantum circuit 120 by sequentially coupling one or more first partial circuits 121 and coupling the second partial circuit 122 to the rear of the one or more first partial circuits 121.

As a result, the information processing device 100 may reduce the depth of the quantum circuit 120 expressing the formula of Trotter decomposition. For example, the information processing device 100 may reduce the depth of the quantum circuit 120 from the depth of the conventional quantum circuit 110 by the depth of the Rz gate 123. The quantum circuit 120 is executed by, for example, an actual machine of a quantum computer. The quantum circuit 120 may be implemented, for example, in a quantum simulator.

Here, while a case in which the second partial circuit 122 is free of at least the Rz gate 123 has been described, the present disclosure is not limited hereto. For example, the second partial circuit 122 may further be free of an Rzz gate representing a rotational interaction between qubits. In this case, the information processing device 100 may further reduce the depth of the quantum circuit 120 expressing the formula of Trotter decomposition.

Here, while a case in which functions as the information processing device 100 are implemented by a single computer has been described, the present disclosure is not limited hereto. For example, functions of the information processing device 100 may be implemented by cooperation of multiple computers. For example, functions of the information processing device 100 may be implemented on a cloud.

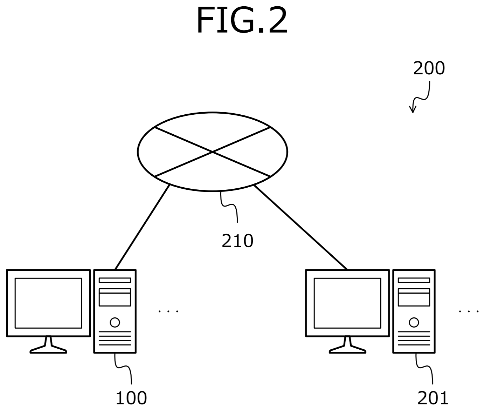

Next, an example of an information processing system 200 to which the information processing device 100 depicted in Fig. 1 is applied is described with reference to Fig. 2.

Fig. 2 is an explanatory diagram depicting an example of the information processing system 200. In Fig. 2, the information processing system 200 includes the information processing device 100 and a client device 201.

In the information processing system 200, the information processing device 100 and the client device 201 are coupled via a wired or wireless network 210. The network 210 is, for example, a local area network (LAN), a wide area network (WAN), the Internet, or the like.

The information processing device 100 is a computer for setting a quantum circuit expressing the formula of Trotter decomposition. The information processing device 100 obtains a processing request for setting a quantum circuit expressing the formula of Trotter decomposition. The processing request includes, for example, information specifying the decomposition number r of the Trotter decomposition. For example, the information processing device 100 obtains the processing request by receiving the processing request from the client device 201.

The information processing device 100 obtains the decomposition number r of the Trotter decomposition. For example, the information processing device 100 obtains the decomposition number r of the Trotter decomposition by identifying the decomposition number r based on the processing request. The information processing device 100 sets r-1 first partial circuits that each includes an Rx gate, an Rz gate, and an Rzz gate, based on the obtained decomposition number r. The contents of the first partial circuit specifically correspond to the term of $(e^{\wedge}(-iH_Z\Delta t)e^{\wedge}(-iH_{ZZ}\Delta t)e^{\wedge}(-iH_X\Delta t))$ in the above formula (7).

The information processing device 100 sets one second partial circuit that is free of at least the Rz gate. The content of the second partial circuit specifically corresponds to the expression $(e^{\wedge}(-iH_{ZX}\Delta t)e^{\wedge}(-iH_X\Delta t))$. The second partial circuit may further be free of an Rzz gate. In a case in which the second partial circuit does not include an Rzz gate, the content of the second partial circuit specifically corresponds to the expression of $(e^{\wedge}(-iH_X\Delta t))$. The information processing device 100 sets a quantum circuit expressing the formula of Trotter decomposition in which r-1 first partial circuits are sequentially coupled and a second partial circuit is coupled to the last first partial circuit.

The information processing device 100 outputs the set quantum circuit. The output format is, for example, display on a display, print output to a printer, transmission to another computer, or storage to a storage area. For example, the information processing device 100 transmits the set quantum circuit to the client device 201. The information processing device 100 is, for example, a server or a PC.

The client device 201 is a computer for using a quantum circuit expressing the formula of Trotter decomposition. The client device 201 receives, from the information processing device 100, a quantum circuit representing the formula of Trotter decomposition. The client device 201 executes a quantum circuit expressing the received formula of Trotter decomposition by using, for example, an actual machine (not depicted) of a quantum computer. The actual machine of the quantum computer is, for example, a computer different from the client device 201.

The client device 201 outputs a result of executing the quantum circuit. The output format is, for example, display on a display, print output to a printer, transmission to another computer, or storage in a storage area. The client device 201 may output a quantum circuit representing the received formula of Trotter decomposition. The client device 201 is, for example, a PC, a tablet terminal, or a smartphone. The client device 201 may be, for example, an actual machine of a quantum computer.

Here, while a case in which the information processing device 100 is a device different from the client device 201 has been described, the present disclosure is not limited hereto. For example, the information processing device 100 may have a function of the client device 201 and may also operate as the client device 201. In this case, the information processing system 200 may omit the client device 201.

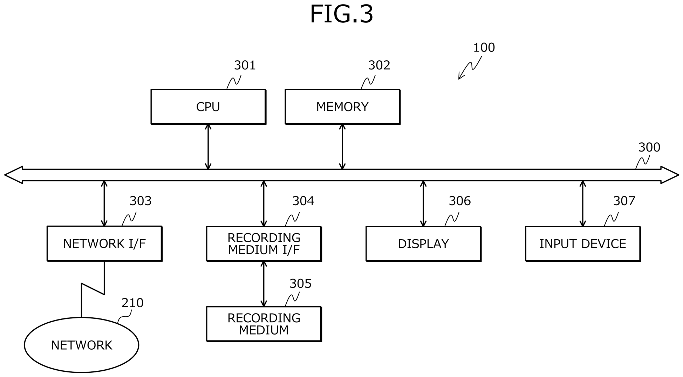

Next, an example of a hardware configuration of the information processing device 100 is described with reference to Fig. 3.

Fig. 3 is a block diagram depicting a hardware configuration example of the information processing device 100. In Fig. 3, the information processing device 100 includes a central processing unit (CPU) 301, a memory 302, and a network interface (I/F) 303. The information processing device 100 also includes a recording medium I/F 304, a recording medium 305, a display 306, and an input device 307. The components are coupled to each other via a bus 300.

Here, the CPU 301 governs overall control of the information processing device 100. The memory 302, for example, includes a read-only memory (ROM), a random-access memory (RAM), and a flash-ROM. In particular, for example, the flash-ROM and/or ROM stores therein various programs and the RAM is used as a work area of the CPU 301. Programs stored to the memory 302 are loaded onto the CPU 301, whereby encoded processes are executed by the CPU 301.

The network I/F 303 is connected to the network 210 via a communications line and is connected to other computers through the network 210. Further, the network I/F 303 administers an internal interface with the network 210 and controls the input and output of data with respect to the other computers. The network I/F 303, for example, is a modem, a LAN adapter, or the like.

The recording medium I/F 304 controls the reading and writing of data with respect to the recording medium 305 under the control of the CPU 301. The recording medium I/F 304 is, for example, a disk drive, a solid-state drive (SSD), a universal serial bus (USB) port, or the like. The recording medium 305 is a nonvolatile memory storing data written thereto under the control of the recording medium I/F 304. The recording medium 305 is, for example, a disk, a semiconductor memory, a USB memory, or the like. The recording medium 305 may be removable from the information processing device 100.

The display 306 displays data such as a cursor, icons, toolboxes, documents, images, or functional information. The display 306 is, for example, a cathode ray tube (CRT), a liquid crystal display, or an organic electroluminescence (EL) display. The input device 307 includes keys for inputting characters, numbers, or various instructions, and inputs data. The input device 307 is, for example, a keyboard or a mouse. The input device 307 may be, for example, a touch panel-type input pad, a numeric keypad, or the like.

The information processing device 100 may include, for example, a camera in addition to the above-described components. Further, the information processing device 100 may include, for example, a printer, a scanner, a microphone, a speaker, or the like in addition to the above-described components. The information processing device 100 may include, for example, the recording medium I/F 304 and/or the recording medium 305 in plural. The information processing device 100 may omit, for example, the display 306 and/or the input device 307. The information processing device 100 may omit the recording medium I/F 304 and the recording medium 305, for example.

An example of a hardware configuration of the client device 201 is similar to the hardware configuration example of the information processing device 100 depicted in Fig. 3 and thus description thereof is omitted.

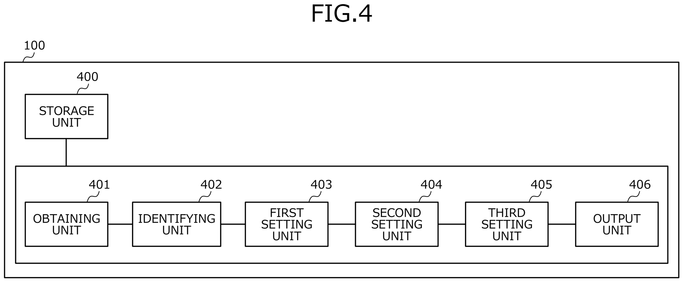

Next, an example of a functional configuration of the information processing device 100 is described with reference to Fig. 4.

Fig. 4 is a block diagram depicting an example of a functional configuration of the information processing device 100. The information processing device 100 includes a storage unit 400, an obtaining unit 401, an identifying unit 402, a first setting unit 403, a second setting unit 404, a third setting unit 405, and an output unit 406.

The storage unit 400 is implemented by, for example, a storage area such as the memory 302 or the recording medium 305 depicted in Fig. 3. Hereinafter, while a case in which the storage unit 400 is included in the information processing device 100 is described, the present disclosure is not limited hereto. For example, the storage unit 400 may be included in a device different from the information processing device 100, and the storage content of the storage unit 400 may be referred to by the information processing device 100.

The obtaining unit 401 to the output unit 406 function as an example of a control unit. More specifically, functions of the obtaining unit 401 to the output unit 406 are implemented, for example, by causing the CPU 301 to execute a program stored in a storage area such as the memory 302 or the recording medium 305 depicted in Fig. 3 or by the network I/F 303. The processing results of the functional units are stored to, for example, a storage area such as the memory 302 or the recording medium 305 depicted in Fig. 3.

The storage unit 400 stores various types of information referred to or updated in the processes of the functional units. The storage unit 400 stores the decomposition number r of the Trotter decomposition. More specifically, the Trotter decomposition approximates a quantum unitary corresponding to the Ising model. The decomposition number r is obtained by, for example, the obtaining unit 401. The decomposition number r may be identified by the identifying unit 402, for example. The decomposition number r may be set in advance by the user, for example.

For example, the storage unit 400 may store the upper limit $r_{max}$ of the decomposition number r corresponding to the upper limit of the depth "depth" of the quantum circuit executable in the actual machine of a specific quantum computer, according to the coherence time in the actual machine of the specific quantum computer. The upper limit value is set in advance by the user, for example.

The obtaining unit 401 obtains various types of information used for the processes by the functional units. The obtaining unit 401 stores the obtained various types of information to the storage unit 400 or outputs the obtained various types of information to the functional units. In addition, the obtaining unit 401 may output various types of information stored in the storage unit 400 to the functional units. The obtaining unit 401 obtains various types of information based on, for example, an operation input of a user. For example, the obtaining unit 401 may receive various types of information from a device different from the information processing device 100.

The obtaining unit 401 obtains, for example, a processing request requesting setting of a quantum circuit that expresses the formula of Trotter decomposition. The processing request may include setting information that enables identifying the decomposition number r. The setting information includes, for example, the decomposition number r itself. The setting information may include, for example, an allowable value for an approximation error by Trotter decomposition, an allowable value for calculation noise, or the like, which is referred to by the identifying unit 402 to identify the decomposition number r.

More specifically, the obtaining unit 401 obtains the processing request by receiving an input of the processing request. More specifically, the obtaining unit 401 may obtain the processing request by receiving the processing request from another computer. The other computer is, for example, the client device 201.

The obtaining unit 401 obtains, for example, the decomposition number r. More specifically, the obtaining unit 401 obtains the decomposition number r by extracting the decomposition number r from the processing request. More specifically, the obtaining unit 401 may obtain the decomposition number r by receiving an input of the decomposition number r. More specifically, the obtaining unit 401 may obtain the decomposition number r by receiving the decomposition number r from another computer. The other computer is, for example, the client device 201.

The obtaining unit 401 may receive a start trigger for starting the process of any of the functional units. The start trigger is, for example, a predetermined operation input by the user. The start trigger may be, for example, reception of predetermined information from another computer. The start trigger may be, for example, output of predetermined information by any of the functional units. For example, the obtaining unit 401 regards obtaining of the processing request as a start trigger for starting the processes of the identifying unit 402, the first setting unit 403, the second setting unit 404, and the third setting unit 405.

When the obtaining unit 401 does not obtain the decomposition number r, the identifying unit 402 may obtain the decomposition number r by identifying the decomposition number r. The identifying unit 402 identifies the upper limit $r_{max}$ of the decomposition number r, for example, by referring to the storage unit 400. The identifying unit 402 identifies the minimum allowable value of the decomposition number r based on, for example, an allowable value for an approximation error by Trotter decomposition. The identifying unit 402 identifies the maximum allowable value of the decomposition number r based on, for example, an allowable value for calculation noise.

For example, the identifying unit 402 identifies the decomposition number r based on at least one of the upper limit value $r_{max}$ of the decomposition number r, the minimum allowable value of the decomposition number r, and the maximum allowable value of the decomposition number r. For example, the identifying unit 402 identifies a decomposition number r that is at least equal to the minimum allowable value of the decomposition number r but not more than the maximum allowable value of the decomposition number r, within a range not more than the upper limit value $r_{max}$ of the decomposition number r, for example. Thus, the identifying unit 402 may identify an appropriate decomposition number r with consideration of the approximation error by the Trotter decomposition and the calculation noise.

The first setting unit 403 sets r-1 first partial circuits that form a quantum circuit expressing a formula of Trotter decomposition. The first partial circuits include an Rx gate representing a rotation action about the X-axis on the qubit. The first partial circuits include an Rz gate representing a rotation action about the Z-axis on the qubit. The first partial circuits include an Rzz gate representing a rotation-type interaction between qubits. More specifically, the content of the first partial circuit corresponds to a partial expression $(e^{-iH_Z\Delta t}e^{-iH_{ZZ}\Delta t}e^{-iH_X\Delta t})$ in the formula of Trotter decomposition. As a result, the first setting unit 403 may appropriately set the r-1 first partial circuits that are elements forming the quantum circuit expressing the formula of Trotter decomposition.

The second setting unit 404 sets a second partial circuit coupled to the rear of the r-1 first partial circuits, the second partial circuit forming a quantum circuit expressing the formula of Trotter decomposition. The second partial circuit includes an Rx gate representing a rotation action about the X-axis on the qubit. The second partial circuit is free of an Rz gate representing a rotation effect about the Z-axis on the qubit. The content of the second partial circuit specifically corresponds to the expression $(e^{\wedge}(-iH_{ZZ}\Delta t)e^{\wedge}(-iH_X\Delta t))$. The second partial circuit may further be free of an Rzz gate representing a rotational interaction between qubits. In this case, the content of the second partial circuit specifically corresponds to the expression $(e^{\wedge}(-iH_X\Delta t))$. Accordingly, the second setting unit 404 may appropriately set one second partial circuit having a depth smaller than that of the first partial circuit by an amount exclusive of at least the Rz gate of the Rz gate and the Rzz gate, which are elements forming the quantum circuit expressing the formula of Trotter decomposition.

The third setting unit 405 sets a quantum circuit expressing the formula of Trotter decomposition by the r-1 first partial circuits set by the first setting unit 403 and one second partial circuit set by the second setting unit 404. The third setting unit 405 sequentially couples the r-1 first partial circuits and couples one second partial circuit to the rear of the r-1 first partial circuits, thereby setting a quantum circuit expressing the formula of Trotter decomposition. Accordingly, the third setting unit 405 may reduce the depth of the quantum circuit expressing the formula of Trotter decomposition. The third setting unit 405 may set, for example, a quantum circuit that expresses the formula of Trotter decomposition and has a smaller depth than a conventional quantum circuit in which r first partial circuits are coupled.

The output unit 406 outputs a processing result of at least one of the functional units. The output format is, for example, display on a display, print output to a printer, transmission to an external device by the network I/F 303, or storage to a storage area such as the memory 302 or the recording medium 305. Accordingly, the output unit 406 may notify the user of the processing result of at least one of the functional units, and the convenience of the information processing device 100 may be improved.

The output unit 406 outputs, for example, the quantum circuit set by the third setting unit 405. More specifically, the output unit 406 outputs the quantum circuit so that the user may refer to the quantum circuit. More specifically, the output unit 406 may transmit the quantum circuit to another computer. The other computer is, for example, the client device 201. This allows the output unit 406 to make the quantum circuit available externally.

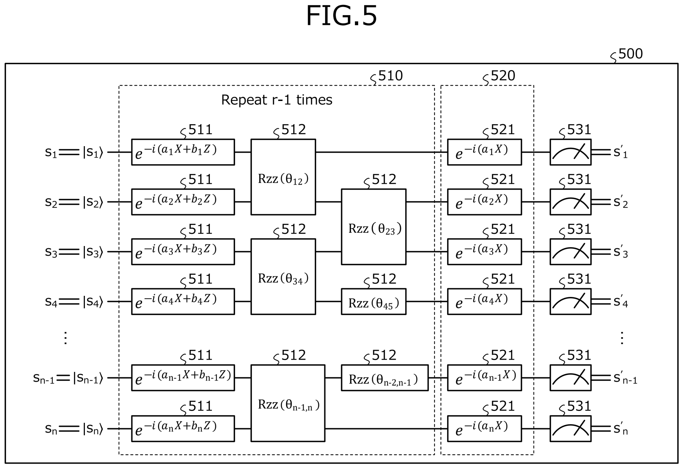

Next, an example of operation of the information processing device 100 is described with reference to Fig. 5.

Fig. 5 is an explanatory diagram depicting an example of operation of the information processing device 100. In Fig. 5, the information processing device 100 sets the first partial circuit 510 in which the Rx gate, the Rz gate, and the Rzz gate are combined so as to represent a partial expression $(e^{\wedge}(-iH_Z\Delta t)e^{\wedge}(-iH_{ZZ}\Delta t)e^{\wedge}(-iH_X\Delta t))$ in the formula of Trotter decomposition.

More specifically, the first partial circuit 510 includes a quantum gate 511 that acts on the quantum state $|s_i\rangle$ represented by the i-th qubit. The quantum gate 511 is a combination of an Rx gate and an Rz gate. More specifically, the quantum gate 511 represents $e^{\wedge}(-ia_iX+b_iZ)$. More specifically, the first partial circuit 510 includes a quantum gate 512 that acts on the quantum state $|s_i\rangle$ represented by the i-th qubit and the quantum state $|s_j\rangle$ represented by the j-th qubit. The quantum gate 512 corresponds to an Rzz gate. The quantum gate 512 specifically represents $Rzz(\theta_{ij})$.

The information processing device 100 sets the Rz gate and the second partial circuit 520 that does not include the Rzz gate. More specifically, the content of the second partial circuit 520 corresponds to the content obtained by deleting the Rz gate and the Rzz gate from the content of the first partial circuit 510. More specifically, the second partial circuit 520 includes a quantum gate 521 that acts on the quantum state $|s_i\rangle$ represented by the i-th qubit. More specifically, the quantum gate 521 corresponds to an Rx gate.

The information processing device 100 sets a quantum circuit 500 that expresses the formula of Trotter decomposition, in which r-1 first partial circuits 510 and one second partial circuit 520 are sequentially coupled, and a measuring unit 531 that measures a quantum state $|s'_i\rangle$ represented by an i-th qubit is inserted. More specifically, the quantum circuit 500 represents the following formula (11).

$$U'' = \left(e^{-iH_Z\Delta t}e^{-iH_{ZZ}\Delta t}e^{-iH_X\Delta t}\right)^{r-1}e^{-iH_X\Delta t} \quad \ldots(11)$$

Thus, the information processing device 100 may reduce the depth of the quantum circuit 500 expressing the formula of Trotter decomposition. For example, the information processing device 100 may reduce the depth of the quantum circuit 500 expressing the formula of Trotter decomposition by an amount corresponding to the Rz gate and the Rzz gate that the second partial circuit 520 is free of. Therefore, the information processing device 100 may set the quantum circuit 500 with a reduced depth so as to be executable even in an actual machine of a quantum computer of a scale called NISQ, for example. Further, the information processing device 100 may reduce the execution load and execution time of the quantum circuit 500.

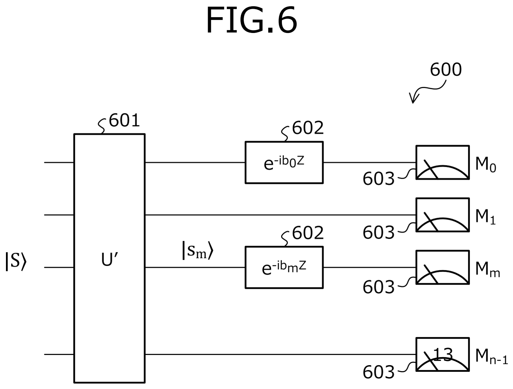

Next, a reason why the Rz gate may be deleted when the information processing device 100 sets the content of the second partial circuit 520 is described with reference to Fig. 6.

Fig. 6 is an explanatory diagram depicting a reason why the Rz gate may be deleted. In Fig. 6, a quantum circuit 600 includes a partial circuit 601 represented by the above formula (7). The quantum circuit 600 includes a quantum gate 602 that operates on the quantum state $|s_i\rangle$ represented by the i-th qubit. The quantum gate 602 represents e^(-ib_iZ). The quantum gate 602 corresponds to an Rz gate. The quantum circuit 600 includes a measuring unit 603 that measures the quantum state $|s'_i\rangle$ represented by the i-th qubit. The measuring unit 603 obtains a result $M_i$ of measuring the quantum state $|s'_i\rangle$.

Here, a result $M_m$ obtained by measuring, by the measuring unit 603, the quantum state $|s'_i\rangle$ obtained by causing the quantum gate 602, which is an Rz gate, to act on the quantum state $|s_m\rangle$ represented by the m-th qubit is <S_m(e^(-ib_iZ)) ^(†)σ_z e^(-ib_iZ)S_m>. Here, the result $M_m$ measured by the measuring unit 603 may be transformed as depicted in the following formula (12).

$$M_m = \left\langle s_m e^{-ib_m Z^\dagger} \sigma_Z e^{-ib_m Z} s_m \right\rangle$$
$$= \langle s_m \cos^2 b_m \sigma_Z + \sin^2 b_m \sigma_Z \, s_m \rangle$$
$$= \langle s_m \sigma_z s_m \rangle \qquad \qquad \dots (12)$$

As depicted in the above formula (12), the result $M_m$ measured by the measuring unit 603 coincides with the result <S_mσ_ZS_m> obtained by directly measuring the quantum state $|s_m\rangle$ represented by the m-th qubit before the quantum gate 602 as the Rz gate is operated. In other words, whether the quantum gate 602 as the Rz gate is operated does not affect the result $M_m$ measured by the measuring unit 603. More specifically, when the measuring unit 603 performs projection measurement with respect to the Z-axis, it is considered that the influence of the rotation action around the Z-axis on the qubit represented by the Rz gate does not appear.

Therefore, it is considered that the Rz gate may not be present in one second partial circuit 520 present immediately before the measuring unit 531 in the quantum circuit 500 described above, which expresses the formula of Trotter decomposition. Therefore, the information processing device 100 does not include the Rz gate in the second partial circuit 520, and thus it is possible to reduce the depth of the quantum circuit 500 expressing the formula of Trotter decomposition without impairing the ability to express the formula of Trotter decomposition.

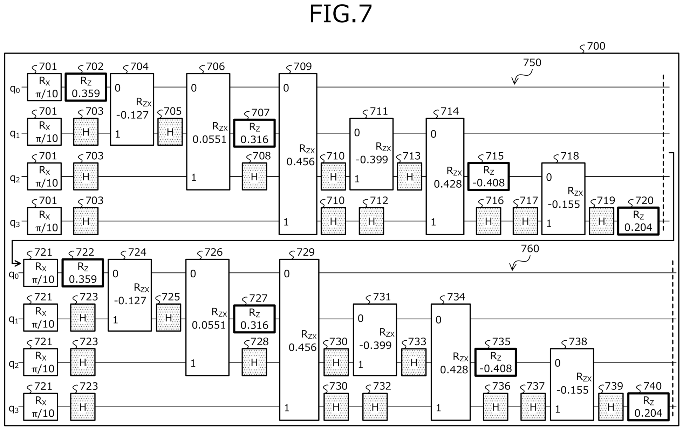

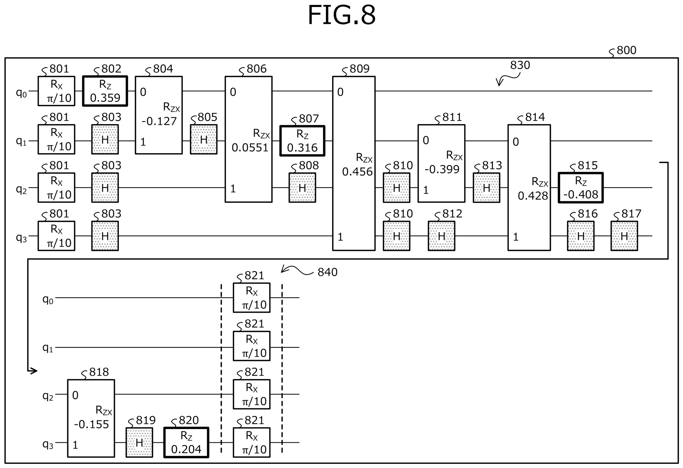

Next, with reference to Figs. 7 and 8, a description will be given of a specific example of a conventional quantum circuit 700 expressing the formula of Trotter decomposition and a specific example of a quantum circuit 800 expressing the formula of Trotter decomposition set by the information processing device 100. Here, it is assumed that r=2 for simplification of description. Further, it is assumed that the number of qubits =4.

Fig. 7 is an explanatory diagram depicting a specific example of a conventional quantum circuit 700 expressing the formula of Trotter decomposition. The quantum circuit 700 includes quantum gates 701 to 740. The quantum gates 701 to 720 are a partial circuit 750 representing one execution of a partial expression (e^(-iH_ZΔt)e^(-iH_ZZΔt)e^(-iH_XΔt)) in the formula of Trotter decomposition. The quantum gates 721 to 740 are a partial circuit 760 representing one execution of a partial expression (e^(-iH_ZΔt)e^(-iH_ZZΔt)e^(-iH_XΔt)) in the formula of Trotter decomposition. More specifically, on the quantum circuit 700, the Rzz gate is implemented with a combination of basic gates. In the example depicted in Fig. 7, the depth of the quantum circuit 700 is 32 because the number of stages is a set of quantum gates that may be executed in parallel as one stage. Next, Fig. 8 is described.

Fig. 8 is an explanatory diagram depicting a specific example of a quantum circuit 800 expressing the formula of Trotter decomposition. The quantum circuit 800 includes quantum gates 801 to 821. The quantum gates 801 to 820 are a partial circuit 850 representing one execution of a partial expression (e^(-iH_ZΔt)e^(-iH_ZZΔt)e^(-iH_XΔt)) in the formula of Trotter decomposition. The quantum gate 821 omits e^(-iH_ZΔt) related to the Rz gate and e^(-iH_ZZΔt) related to the Rzz gate, and represents e^(-iH_XΔt) related to the Rx gate. In the example depicted in Fig. 8, the depth of the quantum circuit 800 is 17 because the number of stages is a set of quantum gates that may be executed in parallel as one stage. Thus, the depth of the quantum circuit 800 is less than the depth of the conventional quantum circuit 700.

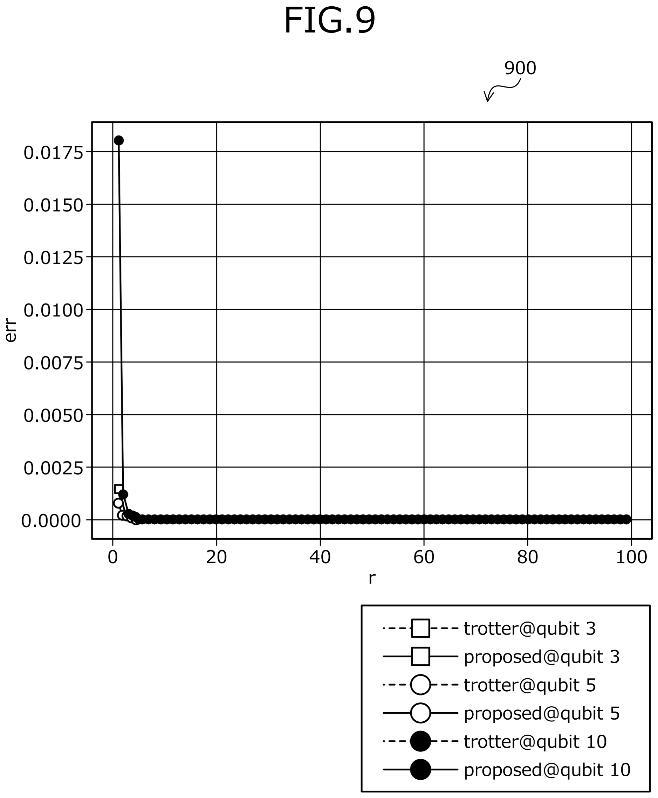

Next, an example of an effect of the information processing device 100 is described with reference to Figs. 9 to 12. More specifically, an example of an effect of the information processing device 100 is described by comparing an error value of the conventional method with an error value of the method by the information processing device 100. An error value is an approximation error. In the following description, the method by the information processing device 100 may be referred to as "present method".

Figs. 9, 10, 11, and 12 are explanatory diagrams depicting examples of effects. In the examples depicted in Figs. 9 to 12, the quantum unitary is defined by, for example, the following expression (13). In the conventional method, it is assumed that a quantum circuit represented by the following formula (14) is set. In the present method, it is assumed that a quantum circuit represented by the following formula (15) is set. The error value of the conventional method is defined by the following formula (16), for example. The error value of the present method is defined by the following formula (17), for example.

$$U = e^{-iHt} \quad \dots (13)$$

$$U' = \left(e^{-iH_Z \Delta t} e^{-iH_{ZZ} \Delta t} e^{-iH_X \Delta t}\right)^r \quad \dots (14)$$

$$U'' = \left(e^{-iH_Z \Delta t} e^{-iH_{ZZ} \Delta t} e^{-iH_X \Delta t}\right)^{r-1} e^{-iH_X \Delta t} \quad \dots (15)$$

$$err_1 = \| \langle 0 | U^\dagger \sigma_Z^{\otimes n} U | 0 \rangle - \langle 0 | U'^\dagger \sigma_Z^{\otimes n} U' | 0 \rangle \|^2 \quad \dots (16)$$

$$err_2 = \| \langle 0 | U^\dagger \sigma_Z^{\otimes n} U | 0 \rangle - \langle 0 | U''^\dagger \sigma_Z^{\otimes n} U'' | 0 \rangle \|^2 \quad \dots (17)$$

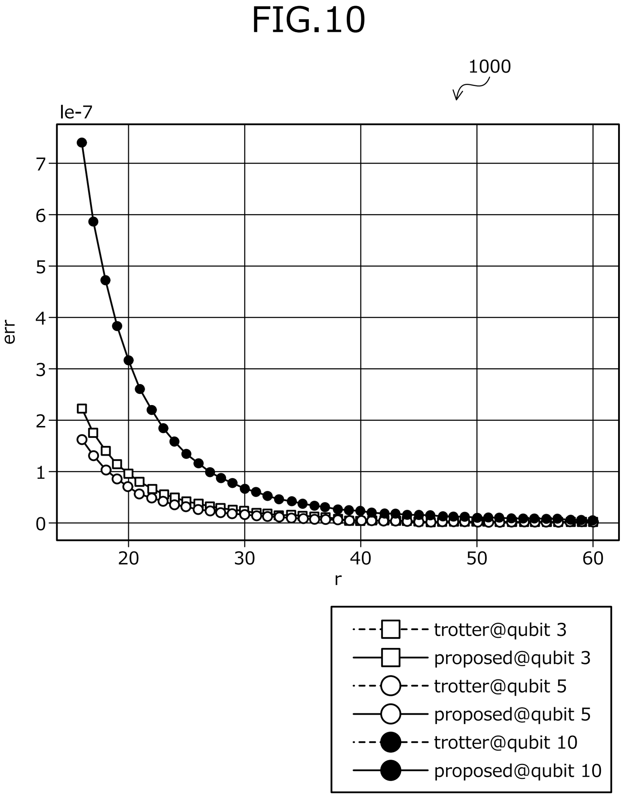

First, Fig. 9 is described. In Fig. 9, a graph 900 represents change in the error value of the conventional method and change in the error value of the present method with respect to change in the decomposition number r when the value of the decomposition number r is 0 or more but not more than 100 and the number of qubits is 3, 5, and 10, respectively. "Trotter" in the graph 900 corresponds to the conventional method. "Proposed" in the graph 900 corresponds to the present method. A horizontal axis of the graph 900 corresponds to, for example, the decomposition number r. A vertical axis of the graph 900 corresponds to, for example, an error value. Next, Fig. 10 is described.

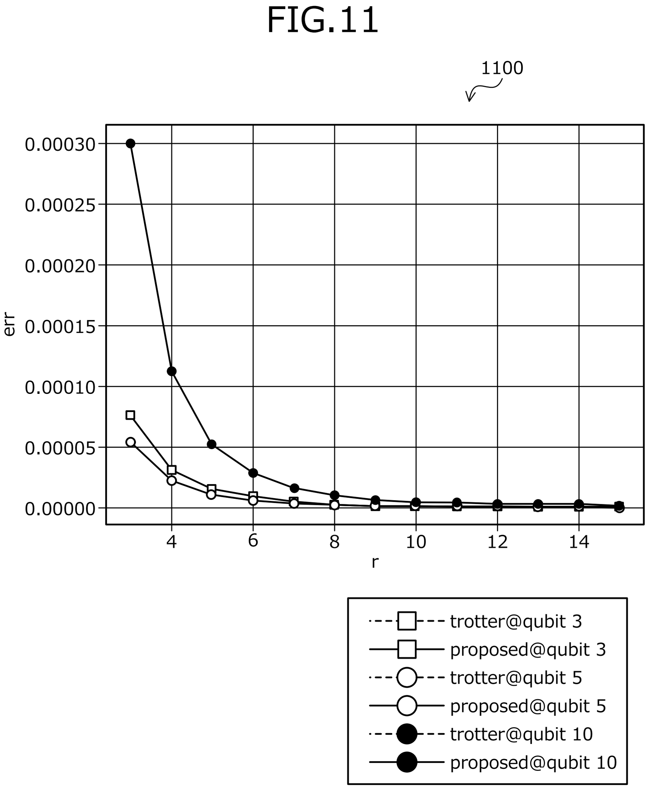

In Fig. 10, a graph 1000 represents change in the error value of the conventional method and change in the error value of the present method with respect to change in the decomposition number r in a case where the value of the decomposition number r is 0 or more but not more than 60 and the number of qubits is 3, 5, and 10, respectively. "Trotter" in the graph 1000 corresponds to the conventional method. "Proposed" in the graph 1000 corresponds to the present method. A horizontal axis of the graph 1000 corresponds to, for example, the decomposition number r. A vertical axis of the graph 1000 corresponds to, for example, an error value. Next, Fig. 11 is described.

In Fig. 11, a graph 1100 represents change in the error value of the conventional method and change in the error value of the present method with respect to change in the decomposition number r in a case where the value of the decomposition number r is 0 or more but not more than 14 and the number of qubits is 3, 5, and 10, respectively. "Trotter" in the graph 1100 corresponds to the conventional method. "Proposed" in the graph 1100 corresponds to the present method. The horizontal axis of the graph 1100 corresponds to, for example, the decomposition number r. A vertical axis of the graph 1100 corresponds to, for example, an error value.

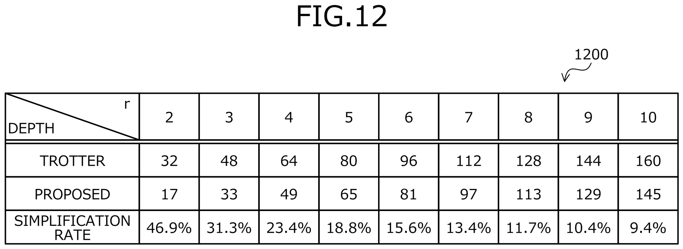

As depicted in Figs. 9 to 11, the error value of the present method is the same as the error value of the conventional method. Therefore, the present method may reduce the depth of the quantum circuit without adversely affecting the approximation error as compared with the conventional method. Next, Fig. 12 is described.

In Fig. 12, a table 1200 represents the depth of the quantum circuit of the conventional method and the depth and the simplification rate of the quantum circuit of the present method corresponding to each decomposition number r in a range from 2 to 10. The simplification rate represents the degree of reduction in the depth of the quantum circuit of the present method with respect to the depth of the quantum circuit of the conventional method. As depicted in Fig. 12, the present method may reduce the depth of the quantum circuit expressing the formula of Trotter decomposition as compared with the conventional method.

In addition, for example, another method of setting a quantum circuit expressing the formula of Trotter decomposition by omitting only the Rzz gate is conceivable with reference to Layden, David, et al. "Quantum-enhanced Markov Chain Monte Carlo." Nature 619.7969 (2023): 282-287. The present method may reduce the depth of the quantum circuit expressing the formula of Trotter decomposition by an amount corresponding to the omission of the Rz gate, as compared with the other method.

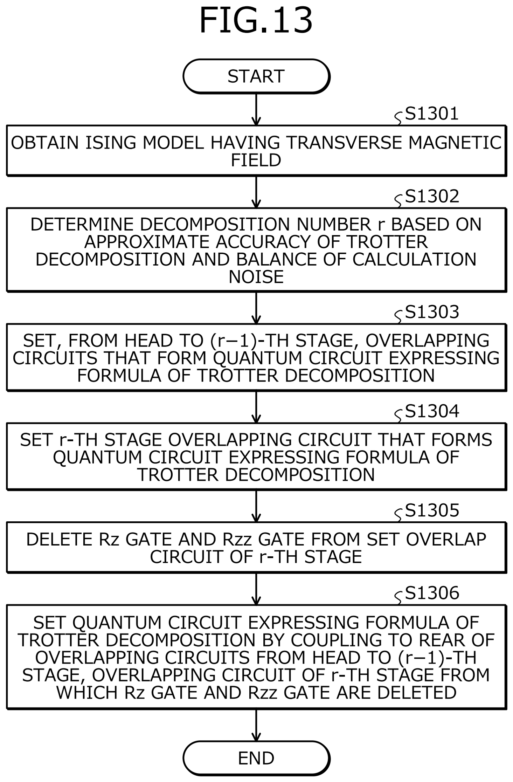

Next, an example of an overall process procedure executed by the information processing device 100 is described with reference to Fig. 13. The overall process is implemented by, for example, the CPU 301, a storage area such as the memory 302 and the recording medium 305, and the network I/F 303 depicted in Fig. 3.

Fig. 13 is a flowchart depicting an example of the overall process procedure. In Fig. 13, the information processing device 100 obtains an Ising model having a transverse magnetic field (step S1301).

Next, the information processing device 100 determines the decomposition number r based on the approximate accuracy of the Trotter decomposition and the balance of the calculation noise (step S1302). Then, the information processing device 100 sets overlapping circuits from the head to the (r-1)-th stage, the overlapping circuits forming a quantum circuit expressing the formula of Trotter decomposition, based on the Ising model with a transverse magnetic field (step S1303).

In addition, the information processing device 100 sets an r-th stage overlapping circuit that forms a quantum circuit expressing the formula of Trotter decomposition, based on the Ising model with a transverse magnetic field (step S1304). Next, the information processing device 100 deletes the Rz gate and the Rzz gate from the set overlap circuit of the r-th stage (step S1305).

Then, the information processing device 100 sets a quantum circuit expressing the formula of Trotter decomposition by coupling to the rear of the overlapping circuits from the head to the (r-1)-th stage, the overlapping circuit of the r-th stage from which the Rz gate and the Rzz gate are deleted (step S1306). Thereafter, the information processing device 100 ends the overall process procedure.

Here, the information processing device 100 may change the sequence in which some of the processes of some steps in Fig. 13 are executed. For example, the sequence of the processes at steps S1301 and S1302 may be changed. In addition, the information processing device 100 may omit the processing of some steps in Fig. 13. For example, when the decomposition number r is set in advance, the process at step S1302 may be omitted.

The information processing device 100 may be applied to, for example, a case where a quantum circuit expressing the formula of Trotter decomposition is used in quantum chemical calculation, quantum multibody system simulation, quantum annealing, or the like.

As described above, according to the information processing device 100, it is possible to obtain the decomposition number of the Trotter decomposition that approximates the quantum unitary corresponding to the Ising model. According to the information processing device 100, it is possible to set one or more first partial circuits of a first count that is one less than the obtained composition number, each of the one or more first partial circuits includes the Rz gate representing the rotation action about the Z-axis on the qubit. According to the information processing device 100, it is possible to set the second partial circuit that is free of the Rz gate representing the rotation action about the Z-axis on the qubit and is coupled to the rear of one or more first partial circuits. According to the information processing device 100, it is possible to set a quantum circuit expressing the formula of Trotter decomposition by one or more first partial circuits and a second partial circuit. Accordingly, the information processing device 100 may reduce the depth of the quantum circuit expressing the formula of Trotter decomposition.

According to the information processing device 100, it is possible to further set the first partial circuit including the Rzz gate representing the rotational interaction between the qubits. According to the information processing device 100, it is possible to set the second partial circuit that is free of an Rzz gate representing a rotational interaction between qubits. Accordingly, the information processing device 100 may reduce the depth of the quantum circuit expressing the formula of Trotter decomposition.

According to the information processing device 100, it is possible to further set the first partial circuit including the Rx gate representing the rotation action about the X-axis on the qubit. According to the information processing device 100, it is possible to further set the second partial circuit including the Rx gate representing the rotation action about the X-axis on the qubit. Accordingly, the information processing device 100 may set the quantum circuit appropriately expressing the formula of Trotter decomposition by the Rx gate.

According to the information processing device 100, it is possible to identify the decomposition number based on the upper limit value of the decomposition number according to the coherence time, the minimum allowable value of the decomposition number according to the allowable value of the approximation error of the Trotter decomposition, and the maximum allowable value of the decomposition number according to the allowable value of the calculation noise. Accordingly, the information processing device 100 may use an appropriate decomposition number with consideration of the approximation error and the calculation noise.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

According to the embodiment, it is possible to reduce the depth of the quantum circuit expressing the formula of Trotter decomposition.

All examples and conditional language provided herein are intended for pedagogical purposes of aiding the reader in understanding the embodiments of the present invention and the concepts contributed by the inventor to further the art, and are not to be construed as limitations to such specifically recited examples and conditions, nor does the organization of such examples in the specification relate to a depicting of the superiority and inferiority of the invention. Although one or more embodiments of the present invention have been described in detail, it should be understood that the various changes, substitutions, and alterations could be made hereto without departing from the spirit and scope of the invention.

In any of the above aspects, the various features may be implemented in hardware, or as software modules running on one or more processors/computers. The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

## Claims

1. An information processing program for causing a computer to execute a process, the process comprising:

   obtaining a decomposition number of a Trotter decomposition approximating a quantum unitary corresponding to an Ising model; and
   setting a quantum circuit expressing a formula of the Trotter decomposition by one or more first partial circuits and a second partial circuit, the one or more first partial circuits being of a first count one less than the obtained decomposition number and each including an Rz gate that represents a rotation action about a Z-axis on a qubit, the second partial circuit being free of the Rz gate and coupled to a rear of the one or more first partial circuits.

2. The information processing program according to claim 1, wherein

   the qubit is one of a plurality of qubits,
   the one or more partial circuits each further include an Rzz gate that represents a rotational interaction between the plurality of qubits, and
   the second partial circuit is free of the Rzz gate.

3. The information processing program according to claim 1 or 2, wherein

   the one or more first partial circuits each further includes an Rx gate that represents the rotation action about an X-axis on the qubit, and
   the second partial circuit further includes the Rx gate.

4. The information processing program according to any of the preceding claims, wherein
   the obtaining includes identifying the decomposition number based on an upper limit of the decomposition number according to a coherence time, a minimum allowable value of the decomposition number according to an allowable value of an approximation error of the Trotter decomposition, and a maximum allowable value of the decomposition number according to an allowable value of calculation noise, and thereby obtaining the decomposition number.

5. An information processing method executed by a computer, the method comprising:

   obtaining a decomposition number of a Trotter decomposition approximating a quantum unitary corresponding to an Ising model; and
   setting a quantum circuit expressing a formula of the Trotter decomposition by one or more first partial circuits and a second partial circuit, the one or more first partial circuits being of a first count one less than the obtained decomposition number and each including an Rz gate that represents a rotation action about a Z-axis on a qubit, the second partial circuit being free of the Rz gate and coupled to a rear of the one or more first partial circuits.

6. An information processing device, comprising:

   a memory; and
   a processor coupled to the memory, the process configured to:

   obtain a decomposition number of a Trotter decomposition approximating a quantum unitary corresponding to an Ising model; and
   set a quantum circuit expressing a formula of the Trotter decomposition by one or more first partial circuits and a second partial circuit, the one or more first partial circuits being of a first count one less than the obtained decomposition number and each including an Rz gate that represents a rotation action about a Z-axis on a qubit, the second partial circuit being free of the Rz gate and coupled to a rear of the one or more first partial circuits.

**7.** A computer-readable storage medium having the computer program of any of claims 1 to 4 stored thereon.

# FIG.1

TROTTER DECOMPOSITION FORMULA

TROTTER DECOMPOSITION FORMULA

repeat r-1 times

repeat r times

# FIG.2

# FIG.3

# FIG.4

100

400

STORAGE
UNIT

401

OBTAINING
UNIT

402

IDENTIFYING
UNIT

403

FIRST
SETTING
UNIT

404

SECOND
SETTING
UNIT

405

THIRD
SETTING
UNIT

406

OUTPUT
UNIT

# FIG.5

# FIG.6

# FIG.7

FIG.8

# FIG.9

900

# FIG.10

# FIG.11

1100

# FIG.12

1200

| r DEPTH | 2 | 3 | 4 | 5 | 6 | 7 | 8 | 9 | 10 |
|---|---|---|---|---|---|---|---|---|---|
| TROTTER | 32 | 48 | 64 | 80 | 96 | 112 | 128 | 144 | 160 |
| PROPOSED | 17 | 33 | 49 | 65 | 81 | 97 | 113 | 129 | 145 |
| SIMPLIFICATION RATE | 46.9% | 31.3% | 23.4% | 18.8% | 15.6% | 13.4% | 11.7% | 10.4% | 9.4% |

# FIG.13

START

$\subset$S1301

OBTAIN ISING MODEL HAVING TRANSVERSE MAGNETIC
FIELD

$\subset$S1302

DETERMINE DECOMPOSITION NUMBER r BASED ON
APPROXIMATE ACCURACY OF TROTTER
DECOMPOSITION AND BALANCE OF CALCULATION
NOISE

$\subset$S1303

SET, FROM HEAD TO (r−1)-TH STAGE, OVERLAPPING
CIRCUITS THAT FORM QUANTUM CIRCUIT EXPRESSING
FORMULA OF TROTTER DECOMPOSITION

$\subset$S1304

SET r-TH STAGE OVERLAPPING CIRCUIT THAT FORMS
QUANTUM CIRCUIT EXPRESSING FORMULA OF
TROTTER DECOMPOSITION

$\subset$S1305

DELETE Rz GATE AND Rzz GATE FROM SET OVERLAP
CIRCUIT OF r-TH STAGE

$\subset$S1306

SET QUANTUM CIRCUIT EXPRESSING FORMULA OF
TROTTER DECOMPOSITION BY COUPLING TO REAR OF
OVERLAPPING CIRCUITS FROM HEAD TO (r−1)-TH
STAGE, OVERLAPPING CIRCUIT OF r-TH STAGE FROM
WHICH Rz GATE AND Rzz GATE ARE DELETED

END

| | Europäisches Patentamt European Patent Office Office européen des brevets | **EUROPEAN SEARCH REPORT** | **Application Number** EP 25 22 0899 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOUNGSEOK KIM: "Evidence for the utility of quantum computing before fault tolerance", NATURE, [Online] vol. 618, no. 7965, 15 June 2023 (2023-06-15), pages 500-505, XP093156199, London ISSN: 0028-0836, DOI: 10.1038/s41586-023-06096-3 [retrieved on 2026-03-02] * page 500 - page 504; figures 1, 4a * | 1-7 | INV. G06N10/20 |
| X | Hai-Jun Liao ET AL: "Simulation of IBM's kicked Ising experiment with Projected Entangled Pair Operator", arXiv.org, 1 August 2023 (2023-08-01), pages 1-8, XP093371553, Retrieved from the Internet: URL:https://arxiv.org/abs/2308.03082 [retrieved on 2026-03-02] * page 2 - page 4; figure 2 * | 1-7 | |
| A | ROHIT SARMA SARKAR ET AL: "Quantum circuit model for Hamiltonian simulation via Trotter decomposition", ARXIV.ORG, CORNELL UNIVERSITY LIBRARY, 201 OLIN LIBRARY CORNELL UNIVERSITY ITHACA, NY 14853, [Online] 22 May 2024 (2024-05-22), XP091764746, [retrieved on 2026-03-02] * page 5 - page 7; figure 1 * | 1-7 | TECHNICAL FIELDS SEARCHED (IPC) G06N |

-/--

The present search report has been drawn up for all claims

| Place of search | Date of completion of the search | Examiner |
|---|---|---|
| The Hague | 19 March 2026 | Schlottke, Mikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 22 0899

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DAAN CAMPS ET AL: "An Algebraic Quantum Circuit Compression Algorithm for Hamiltonian Simulation", ARXIV.ORG, CORNELL UNIVERSITY LIBRARY, 201 OLIN LIBRARY CORNELL UNIVERSITY ITHACA, NY 14853, [Online] 6 August 2021 (2021-08-06), XP091028990, [retrieved on 2026-03-02] * page 1 - page 4 * ----- | 1-7 | |
| | | | **TECHNICAL FIELDS SEARCHED (IPC)** |

The present search report has been drawn up for all claims

| Place of search | Date of completion of the search | Examiner |
|---|---|---|
| The Hague | 19 March 2026 | Schlottke, Mikola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**EP 4 773 047 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190362270
- US 20230297865
- JP 2023521223 W
- JP 2020080006 A
- JP 2020521235 W